# EUROPEAN PATENT APPLICATION

(11) **EP 4 765 449 A1**
(43) Date of publication of application: **24.06.2026**
(21) Application number: 25803806.6
(22) Date of filing: 09.05.2025
(51) Int. Cl.: H01M 50/534, H01M 50/533, H01B 1/02, H01M 50/204, H01M 10/6553, H01M 10/653, H01M 10/42

(54) **ELECTRODE ASSEMBLY, BATTERY CELL, AND BATTERY MODULE COMPRISING SAME**

(30) Priority: 16.05.2024 KR 20240063633; 08.05.2025 KR 20250059511
(71) Applicant: LG Energy Solution, Ltd., Seoul 07335 (KR)
(72) Inventor: KIM, Jonghak, Daejeon 34122 (KR); KIM, Hyehyeon, Daejeon 34122 (KR)
(74) Representative: Goddar, Heinz J.
(86) International application number: PCT/KR2025/006237
(87) International publication number: WO 2025/239607

(57) **Abstract**

An exemplary embodiment of the present disclosure provides an electrode assembly including: a positive electrode; a negative electrode; a separator arranged between the positive electrode and the negative electrode; and an electrode lead connected to the positive electrode or the negative electrode, wherein the electrode lead includes a first conductor portion, and a second conductor portion joined to the first conductor portion.

In addition, in the electrode assembly according to an exemplary embodiment of the present disclosure, the first conductor portion is made of a first metal, and the second conductor portion is made of a second metal different from the first metal, thereby enabling a lead material, which is relatively unaffected by redox potential of a battery, to be selected and improving heat dissipation characteristics through the use of the lead material having high thermal conductivity.

## Description

### [Technical Field]

The present disclosure relates to an electrode lead, an electrode assembly, a battery cell including the electrode assembly, and a battery module including the battery cell, and more specifically, to an electrode lead, an electrode assembly, a battery cell, and a battery module having improved heat dissipation characteristics.

### [Background Art]

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources.

Currently, widely used secondary batteries include lithium-ion batteries, lithium polymer batteries, nickel-cadmium batteries, nickel-hydrogen batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module refers to a component in which a plurality of battery cells are connected in series or in parallel, and the battery pack refers to a component in which a plurality of battery modules are connected in series or in parallel to increase a capacity, an output, and the like.

There is a problem in which the temperature of the cell leads rises to 80°C or higher during charging and discharging with application of a high current of the battery cells constituting the battery module. Although it is possible to mitigate the temperature rise by improving heat dissipation characteristics through the use of a lead material having high thermal conductivity, the materials that can be used as leads are limited due to redox potential associated with the battery characteristics.

### [Disclosure]

### [Technical Problem]

The present disclosure has been made in an effort to provide an electrode lead, an electrode assembly, and a battery cell including the same, which can improve heat dissipation characteristics by using a lead material having high thermal conductivity.

### [Technical Solution]

An exemplary embodiment of the present disclosure provides an electrode assembly including: a positive electrode; a negative electrode; a separator arranged between the positive electrode and the negative electrode; and an electrode lead connected to the positive electrode or the negative electrode, wherein the electrode lead includes a first conductor portion, and a second conductor portion joined to the first conductor portion.

In addition, the first conductor portion is made of a first metal.

In addition, the electrode lead is connected to the positive electrode.

In addition, the first metal may be aluminum.

In addition, the first conductor portion of the electrode lead is connected to a positive electrode tab of the positive electrode.

In addition, the second conductor portion is made of a second metal different from the first metal.

In addition, the second metal may be copper or nickel-plated copper.

In addition, the second conductor portion is joined to the first conductor portion in a longitudinal direction.

In addition, the first conductor portion includes a groove in a joining surface to which the second conductor portion is joined, and the second conductor portion includes a coupling protrusion on a joining surface to which the first conductor portion is joined, the coupling protrusion being coupled to the groove.

In addition, the first conductor portion and the second conductor portion each have a wave-shaped joining surface extending in a width direction thereof.

In addition, the first conductor portion and the second conductor portion each have a serrated joining surface extending in a width direction thereof.

In addition, the first conductor portion includes a coupling protrusion on a joining surface to which the second conductor portion is joined, and the second conductor portion includes a groove in a joining surface to which the first conductor portion is joined, the coupling protrusion being coupled to the groove.

Another exemplary embodiment of the present disclosure provides a battery cell including: an electrode assembly; and a cell case configured to accommodate the electrode assembly, wherein the electrode assembly includes a positive electrode, a negative electrode, a separator arranged between the positive electrode and the negative electrode, and an electrode lead connected to the positive electrode or the negative electrode, and the electrode lead includes a first conductor portion, and a second conductor portion joined to the first conductor portion.

In addition, the first conductor portion of the electrode lead is arranged inside the cell case.

In addition, the electrode assembly further includes a lead film configured to cover joining surfaces of the first conductor portion and the second conductor portion.

### [Advantageous Effects]

According to the exemplary embodiments of the present disclosure, the electrode lead, the electrode assembly, and the battery cell including the same can improve heat dissipation characteristics by using a lead material having high thermal conductivity.

In addition, a lead material that is relatively unaffected by redox potential can be selected by employing a dissimilar-material joint lead structure.

In addition, changes in battery production process parameters can be minimized by changing only a material without changing a lead thickness.

### [Brief Description of Drawings]

FIG. 1 is a perspective view of a battery module according to an exemplary embodiment of the present disclosure.
FIG. 2 is an exploded perspective view of the battery module according to the exemplary embodiment of the present disclosure.
FIG. 3 is a perspective view of a terminal busbar in an exemplary embodiment of the present disclosure.
FIG. 4 is a perspective view of an insulating cover and an end plate in an exemplary embodiment of the present disclosure.
FIG. 5 is a plan view of a battery cell in an exemplary embodiment of the present disclosure.
FIG. 6 is a view showing the inside of a pouch-type battery cell in an exemplary embodiment of the present disclosure.
FIG. 7 is a view showing an electrode assembly in an exemplary embodiment of the present disclosure.
FIG. 8 is a plan view of an electrode lead in an exemplary embodiment of the present disclosure.
FIG. 9 is a side view of the electrode lead of FIG. 8.
FIG. 10 is a side view of an electrode lead in another exemplary embodiment of the present disclosure.
FIG. 11 is a plan view of an electrode lead in still another exemplary embodiment of the present disclosure.
FIG. 12 is a plan view of an electrode lead in yet another exemplary embodiment of the present disclosure.
FIG. 13 is a view showing a battery pack according to an exemplary embodiment of the present disclosure.
FIG. 14 is a perspective view of an automobile equipped with a battery pack in an exemplary embodiment of the present disclosure.

### [Best Mode For Carrying Out the Invention]

The advantages and features of the present disclosure, and a method for achieving the same will become apparent with reference to exemplary embodiments described in detail below together with the accompanying drawings. However, the present disclosure is not limited to the exemplary embodiments disclosed below, but can be implemented in a variety of different forms. The exemplary embodiments are provided to only complete the disclosure of the present disclosure and to allow one skilled in the art to which the present disclosure belongs to completely understand the category of the present disclosure. The present disclosure is only defined by the category of the claims. Thus, in some exemplary embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. Conversely, when an element is referred to as being "directly on" another element, it may mean that there is no intervening element present. In addition, when an element such as a layer, a film, a region, a plate, or the like is referred to as being "below" another element, it may be "directly below" another element or an intervening element may also be present. Conversely, when an element is referred to as being "directly below" another element, it may mean that there is no intervening element present.

An electrode lead, an electrode assembly, a battery cell 110, and a battery module 1000 according to preferred exemplary embodiments of the present disclosure will be described in detail with reference to the drawings.

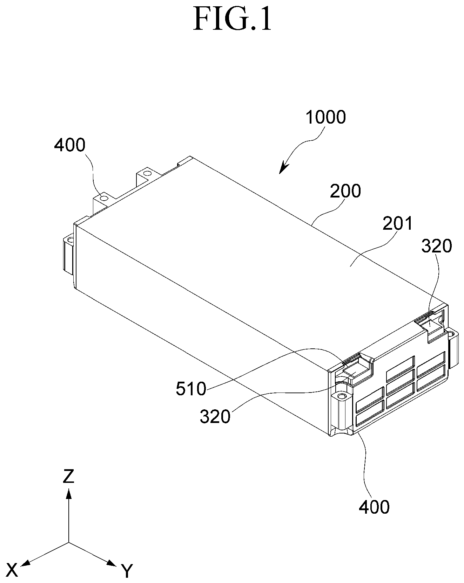

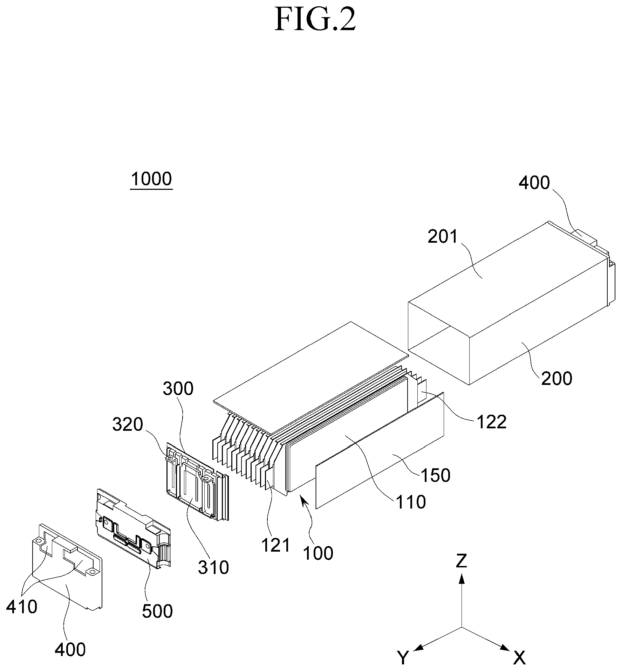

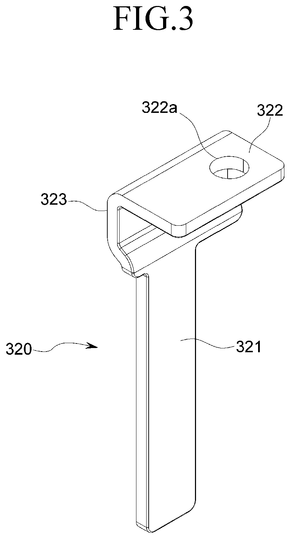

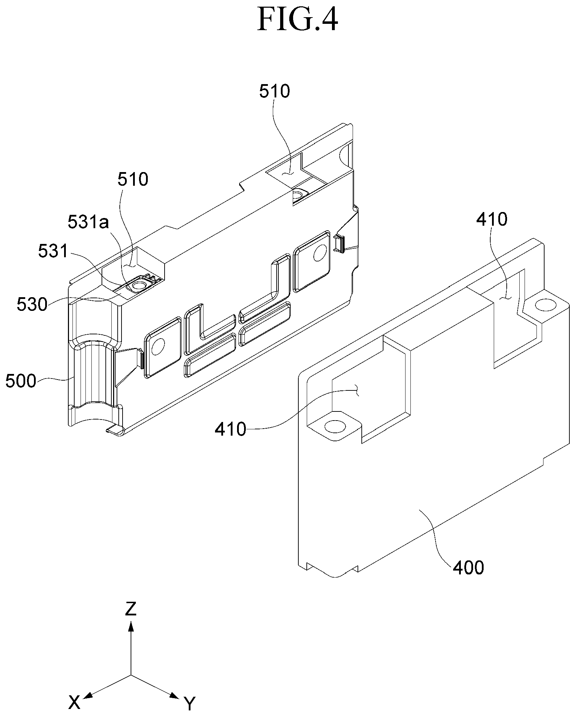

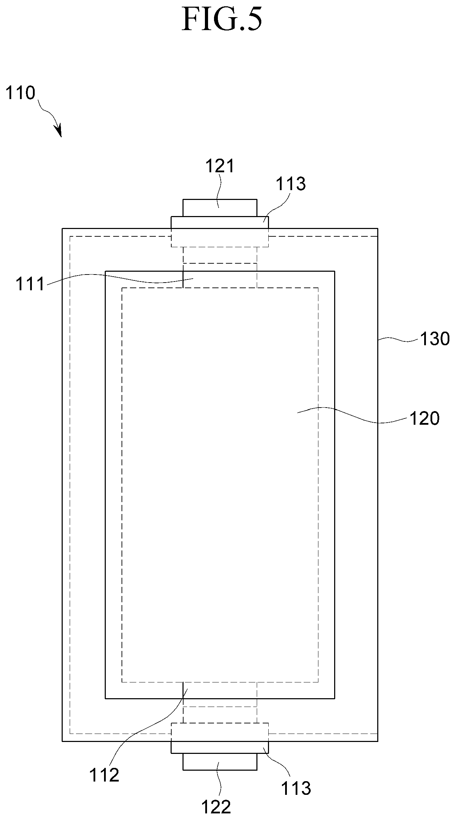

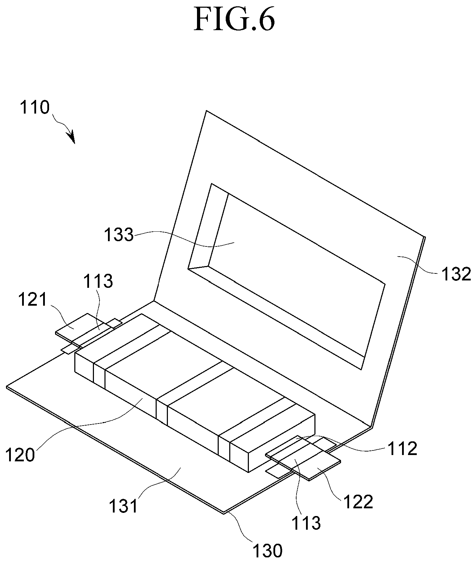

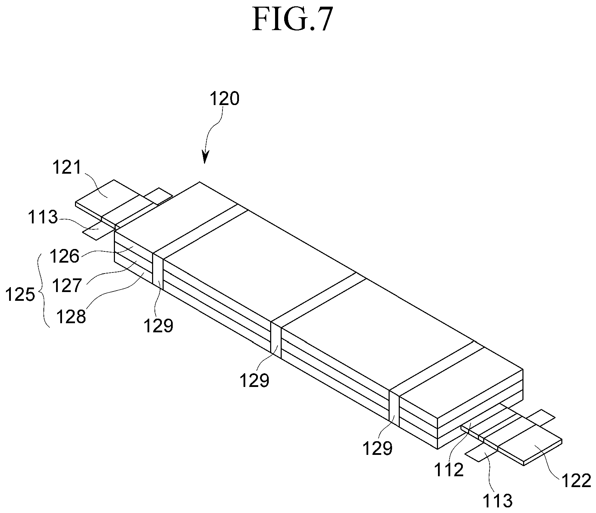

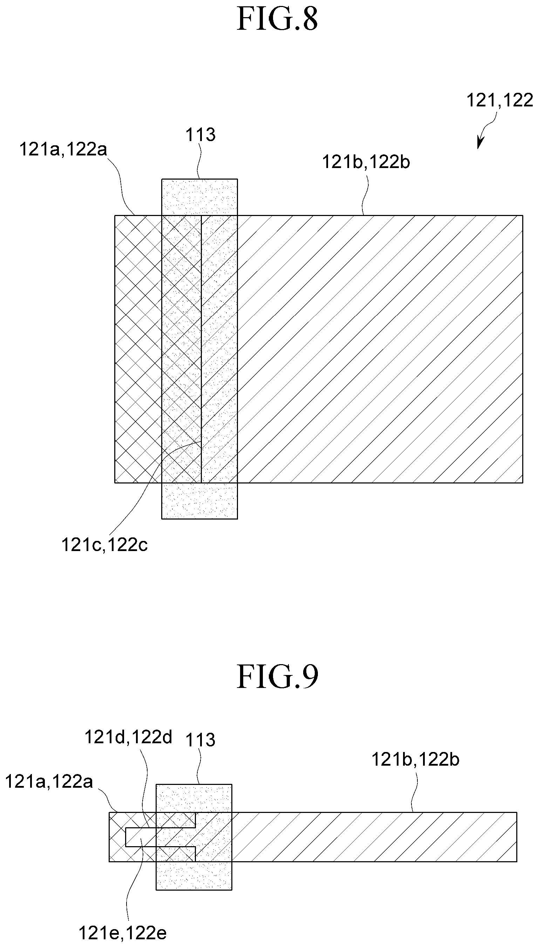

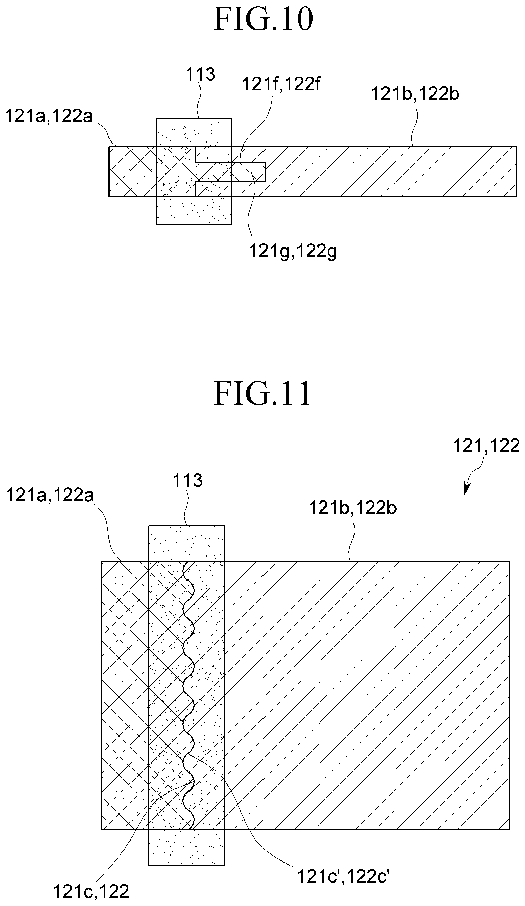

FIG. 1 is a perspective view of a battery module according to an exemplary embodiment of the present disclosure, FIG. 2 is an exploded perspective view of the battery module according to the exemplary embodiment of the present disclosure, FIG. 3 is a perspective view of a terminal busbar in an exemplary embodiment of the present disclosure, FIG. 4 is a perspective view of an insulating cover and an end plate in an exemplary embodiment of the present disclosure, FIG. 5 is a plan view of a battery cell in an exemplary embodiment of the present disclosure, FIG. 6 is a view showing the inside of a pouch-type battery cell in an exemplary embodiment of the present disclosure, FIG. 7 is a view showing an electrode assembly in an exemplary embodiment of the present disclosure, FIG. 8 is a plan view of an electrode lead in an exemplary embodiment of the present disclosure, FIG. 9 is a side view of the electrode lead of FIG. 8, and FIG. 10 is a side view of an electrode lead in another exemplary embodiment of the present disclosure.

A battery module 1000 according to an exemplary embodiment of the present disclosure may include a battery cell stack 100 in which a plurality of battery cells 110 are stacked, a module case 200 that accommodates the battery cell stack 100, a busbar frame 300 positioned on one surface and/or the other surface of the battery cell stack 100, an insulating cover 500 positioned on an outer side of the busbar frame 300, and an end plate 400 positioned on an outer side of the insulating cover 500.

The battery cell stack 100 may be composed of the plurality of battery cells 110 stacked in one direction, and the plurality of battery cells 110 may be electrically connected. The direction in which the plurality of battery cells 110 are stacked may correspond to the X-axis direction (or -X-axis direction) in FIG. 2.

A direction from a front surface toward a rear surface of the battery cell stack 100, or an opposite direction thereto, may be defined as a longitudinal direction of the battery cell stack 100, and may correspond to the Y-axis direction in the drawing. In addition, a direction from an upper surface toward a lower surface of the battery cell stack 100, or an opposite direction thereto, may be defined as a width direction of the battery cell stack 100, and may be the Z-axis direction in the drawing.

The longitudinal direction of the battery cell stack 100 may be substantially the same as the longitudinal direction of the battery cell 110. Electrode leads 121 and 122 of the battery cells 110 may be positioned on the front and rear surface of the battery cell stack 100, and busbars 310 and 320 of the battery module 1000 may be arranged close to the front and rear surfaces of the battery cell stack 100 so as to facilitate electrical connection with the electrode leads 121 and 122. The battery cell 110 will be described below.

The module case 200 may serve to protect the battery cell stack 100 and electrical components connected to the battery cell stack from external physical impacts, and may accommodate the battery cell stack 100 and the electrical components in an internal space of the module case 200.

A structure of the module case 200 may vary, and may be, for example, a monoframe structure. Here, the monoframe may refer to a form of a metal plate with an upper surface, a lower surface, and both side surfaces formed integrally. The monoframe may be manufactured by extrusion molding. As another example, the structure of the module case 200 may be a structure in which a U-shaped frame and a top plate 201 are joined. In the case of a structure in which a U-shaped frame and a top plate 201 are joined, the structure of the module case 200 may be formed by joining the top plate 201 to an upper side of a U-shaped frame, which is a metal plate where a lower plate and both sides are joined or integrated, and each frame or plate may be manufactured by press forming. In addition, the structure of the module case 200 may be provided in the form of an L-shaped frame, in addition to a monoframe or U-shaped frame 210, and may also be provided in various other forms not described in the foregoing example.

The structure of the module case 200 may be provided in an open form in the longitudinal direction of the battery cell stack 100. The front and rear surfaces of the battery cell stack 100 may not be covered by the module case 200. The electrode leads 121 and 122 of the battery cells 110 may not be covered by the module case 200. The front and rear surfaces of the battery cell stack 100 may be covered by the busbar frames 300, end plates 400, busbars 310 and 320, and the like described below. With this arrangement, the front and rear surfaces of the battery cell stack 100 can be protected from external physical impacts and the like.

A compression pad 150 may be positioned between the battery cell stack 100 and one of inner surfaces of the module case 200.

The compression pad 150 may be arranged to face the outermost battery cell 110 of the battery cell stack 100 in the X-axis direction in the drawing.

In addition, a thermally conductive resin may be injected between the battery cell stack 100 and an inner surface of the module case 200, and a thermally conductive resin layer may be formed between the battery cell stack 100 and one of inner surfaces of the module case 200 by the injected thermally conductive resin. In this case, the thermally conductive resin layer may be positioned on the Z-axis of the battery cell stack 100, and may be formed between the battery cell stack 100 and the lower plate of the module case 200 positioned on the -Z-axis.

The busbar frame 300 is positioned on one surface of the battery cell stack 100, and may cover one surface of the battery cell stack 100 while simultaneously guiding connection between the battery cell stack 100 and an external device. Specifically, the busbar frame 300 may be positioned on the front or rear surface of the battery cell stack 100, as shown, or may also be positioned on the upper surface, lower surface, or side surface. At least one of the busbars 310 and 320 and a module connector may be mounted on the busbar frame 300. As shown in FIG. 2, one surface of the busbar frame 300 may be connected to one surface or the other surface of the battery cell stack 100, and the other surface of the busbar frame 300 may be connected to the busbars 310 and 320.

The busbar frame 300 may include an electrically insulating material. The busbar frame 300 may restrict the busbars 310 and 320 from coming into contact with portions of the battery cells 110 other than portions where they are joined to the electrode leads 121 and 122, and may prevent an electrical short circuit.

The busbar frame 300 may be positioned on each of one side and the other side of the battery cell stack 100.

The busbars 310 and 320 may be mounted on one surface of the busbar frame 300, and may serve to electrically connect the battery cell stack 100 or the battery cells 110 to an external device circuit. The busbars 310 and 320 may be arranged in plural and protected from external impacts and the like by being positioned between the battery cell stack 100 or the busbar frame 300 and the end plate 400, and the deterioration in durability due to external moisture and the like may be minimized.

The busbars 310 and 320 may be electrically connected to the battery cell stack 100 via the electrode leads 121 and 122 of the battery cells 110.

Specifically, the electrode leads 121 and 122 of the battery cells 110 may be bent and connected to the busbars 310 and 320 after passing through lead slits formed in the busbar frame 300. The battery cells 110 constituting the battery cell stack 100 may be connected in series or in parallel by the busbars 310 and 320.

The busbars 310 and 320 may include a terminal busbar 320 for electrically connecting one battery module 1000 to another battery module 1000. At least a portion of the terminal busbar 320 may be exposed to the outside of the end plate 400 to be connected to another battery module 1000, and the end plate 400 may be provided with a terminal opening portion 410 for this purpose.

One end portion (second portion 322) of the terminal busbar 320 may be exposed through an opening portion 510 of the insulating cover 500 and a terminal opening portion 410 of the end plate 400.

As shown in FIG. 3, the terminal busbar 320 may include a first portion 321 connected to the electrode lead 121, 122 of the battery cell 110 and a second portion 322 exposed to the outside through the terminal opening portion 410. In addition, the terminal busbar 320 may further include a bending portion 323 formed between the first portion 321 and the second portion 322.

In the terminal busbar 320, the first portion 321 may be connected to the second portion 322 via the bending part 323, and one surface of the first portion 321 and one surface of the second portion 322 may be perpendicular to each other. That is, by forming the bent bending portion 323 on the terminal busbar 320, the second portion 322 protrudes and is seated on a seating portion 530 of the insulating cover 500, and the second portion 322 can be electrically connected to an inter busbar (not shown). A coupling hole 322a is formed in the second portion 322 constituting one end portion of the terminal busbar 320, and the second portion 322 of the terminal busbar 320 is fixed by a fixing pin (not shown) inserted into the coupling hole 322a.

The end plate 400 may serve to protect the battery cell stack 100 and electrical components connected to the battery cell stack from external physical impacts by covering an open surface of the module case 200. To this end, the end plate 400 may be made of a material having a predetermined strength, and may include, for example, metal such as aluminum or a plastic material.

Terminal opening portions 410 may be formed in the end plate 400. The terminal opening portions 410 may be arranged on both sides of the end plate 400, respectively. A part of the insulating cover 500 and one end portion (second portion 322) of the terminal busbar 320 may be exposed through the terminal opening portion 410.

A connector opening portion may be positioned between the terminal opening portions 410 arranged on both sides of the end plate 400, and a module connector may be exposed to the outside through the connector opening portion.

The end plate 400 may be coupled to the module case 200 while covering the busbar frame 300 or busbars 310 and 320 located on one surface of the battery cell stack 100. Each corner of the end plate 400 may be coupled to a corresponding corner of the module case 200 by welding, bolting, hooking, or the like.

The end plates 400 may be positioned on one surface and the other surface of the module case 200 to cover both surfaces of the battery cell stack 100, respectively. In the present exemplary embodiment, an example in which the end plates 400 are positioned on the front and rear surfaces of the module case 200 is shown.

In addition, the insulating cover 500 for electrical insulation may be arranged between the end plate 400 and the busbar frame 300. That is, the busbar frame 300, the insulation cover 500, and the end plate 400 may be sequentially positioned from the battery cell stack 100 toward the outside. As with the end plate 400, the busbar frame 300 and the insulating cover 500 may each be provided in plural.

The insulating cover 500 may include an electrical insulating material and may block the busbars 310 and 320 from coming into contact with the end plate 400.

The insulating cover 500 may include an opening portion 510 and a seating portion 530. The opening portion 510 may be arranged on each of both sides of an upper portion of the insulating cover 500, and one end portion (second portion 322) of the terminal busbar 320 may be exposed through the opening portion 510.

A connector opening portion may be positioned between the opening portions 510 positioned on both sides of the insulating cover 500, and a module connector may be exposed to the outside through the connector opening portion.

The insulating cover 500 may be positioned on an inner surface of the end plate 400, and may be in close contact with the inner surface of the end plate 400. However, no such limitation is intended.

As described above, one end portion (second portion 322) of the terminal busbar 320 may be exposed through the opening portion 510, and the exposed one end portion (second portion 322) of the terminal busbar 320 may be seated on the seating portion 530. Accordingly, the seating portion 530 may be arranged adjacent to the opening portion 510 and may be positioned on an upper outer surface.

The second portion 322 of the terminal busbar 320 may be seated on an upper surface of the seating portion 530, and thus the upper surface of the seating portion 530 may form a seating surface. Additionally, as shown in FIG. 4, the seating portion 530 may include a fixing member 531 for fixing the terminal busbar 320.

The fixing member 531 may fix the second portion 322 of the terminal busbar 320 and may include a fixing hole 531a.

A fixing pin (not shown) may be inserted into the fixing hole 531a. The fixing pin (not shown) inserted into the coupling hole 322a formed in the second portion 322 of the terminal busbar 320 is coupled and fixed to the fixing hole 531a, so that the second portion 322 of the terminal busbar 320 can be fixed to the insulating cover 500.

Accordingly, the second portion 322 of the terminal busbar 320 is seated on the seating portion 530 of the insulating cover 500, and the second portion 322 is seated on and comes into contact with the fixing member 531 arranged in the seating portion 530.

A terminal cover portion (not shown) that covers the exposed one end portion (second portion 322) of the terminal busbar 320 may be arranged on the insulating cover 500.

As shown in FIGS. 5 to 7, in the present exemplary embodiment, the battery cell 110 may be provided as a pouch-type battery cell, and the number of pouch-type battery cells stacked per unit area may be maximized. However, the battery cell 110 is not necessarily required to be provided as a pouch-type battery cell, and may instead be provided in prismatic, cylindrical, or various other forms.

The battery cell 110 provided in the form of a pouch-type battery cell may include an electrode assembly 120 and a cell case 130 that accommodates the electrode assembly 120.

The cell case 130 of the battery cell 110 serves to accommodate the electrode assembly 120 and may be a pouch-type cell case 130. The cell case 130 includes a lower case 131 and an upper case 132 covering the lower case 131, and the upper and lower cases 132 and 131 may be formed integrally. In addition, as shown in FIG. 6, the upper and lower cases 132 and 131 may be formed into a structure in which a connecting portion of the upper and lower cases is bent and folded. FIG. 6 shows a state in which the upper case 132 is opened relative to an upper portion of the lower case 131 for convenience in order to show the inside of the pouch-type battery cell 110; however, in an actual completed product, as shown in FIG. 5, the upper case 132 may completely cover the lower case 131 and a sealing portion may be formed along the periphery.

Each of the upper and lower cases 132 and 131 may be composed of a laminate structure including an inner covering layer, a metal layer, and an outer covering layer. The inner covering layer is positioned on an inner side of the cell case 115 with respect to the metal layer, and is required to have insulating properties and resistance to an electrolyte because it comes into direct contact with the electrode assembly 120. Additionally, for sealing with the outside, sealability is required, i.e., a sealed portion formed by thermal bonding between inner layers is required to exhibit excellent thermal bonding strength. Materials for the inner covering layer may be selected from polyolefin-based resins such as polypropylene, polyethylene, polyethylene acrylic acid, and polybutylene, which exhibit excellent chemical resistance and good sealability, polyurethane resins, and polyimide resins, and polypropylene (PP), which exhibits excellent mechanical properties such as tensile strength, rigidity, surface hardness, and impact strength, and chemical resistance, is preferable.

The metal layer is positioned between the inner and outer covering layers and acts as a barrier layer to prevent moisture or various gases from penetrating into the battery from the outside. A preferable material for the metal layer in contact with the inner covering layer may be an aluminum (Al) thin film that is lightweight and has excellent formability.

The outer covering layer is positioned on an outer side of the cell case 130 with respect to the metal layer. For the outer covering layer, a heat-resistant polymer having excellent tensile strength, moisture impermeability, and air impermeability may be used in order to secure heat resistance and chemical resistance while protecting the electrode assembly. For example, nylon or polyethylene terephthalate may be used.

Each of the upper and lower cases 132 and 131 may be formed with an accommodation groove 133, and an electrode assembly may be accommodated in the accommodation grooves 133 of the upper and lower cases 132 and 131.

The electrode assembly 120 that is accommodated in the cell case 130 may be one selected from a group consisting of a jelly-roll type electrode assembly having a structure in which a separator is interposed between long sheet-like positive and negative electrodes and the resulting laminate is then wound, a stack-type electrode assembly including unit cells having a structure in which rectangular positive and negative electrodes are stacked with a separator interposed therebetween, a stack-and-folding type electrode assembly in which unit cells are wound using a long separator film, and a lamination-and-stack type electrode assembly in which unit cells are stacked with a separator interposed therebetween and attached to each other.

In the present disclosure, the electrode assembly 120 may include, for example, an electrode stack 125 and a fixing tape 129 for winding the electrode stack 125, as shown in FIG. 7.

The electrode stack 125 may include a positive electrode 126, a negative electrode 128, and a separator 127 arranged between the positive electrode 126 and the negative electrode 128, and may be formed by stacking the positive electrode 126, the separator 127, and the negative electrode 128. In addition, the electrode stack 125 may have a form in which a length in the longitudinal direction is relatively longer than a length in the width direction.

The positive electrode may include a positive electrode current collector and a first active material layer arranged on the positive electrode current collector, and the first active material layer may be formed by applying an electrode active material to one surface or both surfaces of the positive electrode current collector.

The negative electrode may include a negative electrode current collector and a second active material layer arranged on the negative electrode current collector, and the second active material layer may be formed by applying an electrode active material to one surface or both surfaces of the negative electrode current collector.

The fixing tape 129 serves to fix the electrode stack 125 in which the positive electrode 126, the separator 127, and the negative electrode 128 are stacked, and fixes the electrode stack 125 by winding around the outside thereof.

The electrode stack 125 may include a plurality of positive electrodes 126, a plurality of negative electrodes 128, and a plurality of separators 127.

In addition, the electrode assembly 120 may include two electrode tabs 111 and 112 and two electrode leads 121 and 122.

The electrode tabs 111 and 112 protrude outward from the electrode stack 125. One electrode tab 111 of the two electrode tabs 111 and 112 may be a positive electrode tab connected (extended) to the positive electrode 126, and the other electrode tab 112 may be a negative electrode tab connected (extended) to the negative electrode 128.

The electrode leads 121 and 122 are connected to the electrode tabs 111 and 112, and for example, may be connected to the electrode tabs 111 and 112 by welding. For the electrode leads 121 and 122, any material can be used without particular limitation as long as it is electrically conductive. For example, the material of the electrode leads 121 and 122 may include at least one of copper (Cu), aluminum (Al), nickel (Ni), iron (Fe), carbon (C), chromium (Cr), and manganese (Mn). However, the material of the electrode leads 121 and 122 is not limited to the materials described above, and may be selected in various ways, considering mechanical strength, flexibility, and processability.

A welded portion may be formed by vertically overlapping certain portions of the electrode leads 121 and 122 and the electrode tabs 111 and 112 and welding the overlapped portions, and the electrode tabs 111 and 112 and the electrode leads 121 and 122 may be connected to each other by the welded portion.

One electrode lead 121 of the two electrode leads 121 and 122 may be a positive electrode lead connected to the positive electrode tab, and the other electrode lead 122 may be a negative electrode lead connected to the negative electrode tab. The positive electrode lead may be made of, for example, aluminum, and the negative electrode lead may be made of, for example, copper or nickel-coated copper. However, no such limitation is intended.

A lead film 113 may be attached to each of the electrode leads 121 and 122, as shown in FIGS. 5 to 7. The lead films 113 attached to the electrode leads 121 and 122 are positioned between the electrode leads 121 and 122 and the cell case 130 to prevent a short circuit between the electrode leads 121 and 122 and the cell case 130 and to improve sealing strength, thereby preventing leakage of the electrolyte or the like.

The lead film 113 may be configured such that a pair of films 113 are positioned on both surfaces of each of the electrode leads 121 and 122 and portions of the films that are not in contact with the electrode lead 121, 122 are joined to each other by thermal fusion or the like, thereby wrapping the electrode lead 121, 122, and is formed such that after sealing the cell case 130, a portion of the lead film 113 protrudes outside the cell case 130 so as to be advantageous for preventing short circuits.

The two electrode leads 121 and 122 are shown as being arranged on both sides of the electrode assembly 120, respectively, but may also be arranged on one side of the electrode assembly 120 depending on the arrangement of the electrode tabs 111 and 112. That is, when the two electrode tabs 111 and 112 are arranged on one side of the electrode assembly 120, the two electrode leads 121 and 122 that are connected to the electrode tabs 111 and 112 may also be formed in the same direction of the electrode assembly 120.

FIGS. 8 and 9 show the electrode lead 121, 122 in an exemplary embodiment of the present disclosure. In an exemplary embodiment of the present disclosure, the electrode lead 121, 122 may be a lead in which two or more types of materials (metals) are joined. The electrode lead 121, 122 may be made of clad metal.

As shown, the electrode lead 121, 122 may include a first conductor portion 121a, 122a and a second conductor portion 121b, 122b joined to the first conductor portion 121a, 122a, and the first conductor portion 121a, 122a and the second conductor portion 121b, 122b may be made of different metals. In the present exemplary embodiment, the electrode lead 121, 122 is formed by joining two or more different materials, which can improve heat dissipation characteristics and mitigate temperature increase in the cell and the electrode lead caused by current applied to the battery cell and current generated from the battery cell.

Specifically, the first conductor portion 121a, 122a may be made of a first metal, and the second conductor portion 121b, 122b may be made of a second metal different from the first metal. As an example, the first metal may be aluminum (Al), and the second metal may be copper (Cu) or nickel-plated copper. The second metal may be a metal having a higher thermal conductivity than that of the first metal. The second metal may be a metal having a thermal conductivity at least 1.5 times greater than that of the first metal. In this way, in the present exemplary embodiment, the heat generation performance of the entire electrode lead 121, 122 can be improved by joining the second conductor portion 121b, 122b having high thermal conductivity to the longitudinal end portion of the first conductor portion 121a, 122a.

As another example, the first metal may be copper or nickel-plated copper, and the second metal may be aluminum. The first metal or the second metal may be a plated metal or an alloy.

The first conductor portions 121a and 122a may be connected to the electrode tabs 111 and 112 of the electrode assembly 120, respectively. The first conductor portion 121a of the electrode lead 121 may be connected to the electrode tab 111, which is a positive electrode tab, and in this case, the electrode lead 121 may be a positive electrode lead. When the electrode tab 111, which is a positive electrode tab, is made of aluminum, same-metal joining with the first conductor portion 121a of aluminum may be achieved, thereby improving joining properties.

The first conductor portion 122a of the electrode lead 122 may be connected to the electrode tab 112, which is a negative electrode tab, and in this case, the electrode lead 122 may be a negative electrode lead.

As shown in FIG. 9, a groove 121d, 122d may be formed in a joining surface 121c, 122c of the first conductor portion 121a, 122a, to which the second conductor portion 121b, 122b is joined. The groove 121d, 122d may extend along the width direction of the first conductor portion 121a, 122a and may be formed over the entire width of the first conductor portion 121a, 122a.

The groove 121d, 122d may have a predetermined depth in the inner direction of the first conductor portion 121a, 122a from the joining surface 121c, 122c, and a coupling protrusion 121e, 122e of the second conductor portion 121b, 122b may be inserted into and coupled to the groove 121d, 122d.

The first conductor portions 121a and 122a may be placed inside the pouch-type cell case 130.

The second conductor portion 121b, 122b may be joined to the first conductor portion 121a, 122a, and may be joined to the first conductor portion 121a, 122a in the longitudinal direction thereof.

The second conductor portion 121b, 122b may be made of a second metal different from the first metal. As an example, the second metal could be copper (Cu).

As shown in FIG. 9, in the present exemplary embodiment, the second conductor portion 121b, 122b may include a coupling protrusion 121e, 122e on the joining surface 121c, 122c that is joined to the first conductor portion 121a, 122a.

The coupling protrusion 121e, 122e may extend along the width direction of the second conductor portion 121b, 122b, and may be formed over the entire width of the second conductor portion 121b, 122b.

The coupling protrusion 121e, 122e may protrude from the joining surface 121c, 122c by a predetermined length in the direction of the first conductor portion 121a, 122a, and the coupling protrusion 121e, 122e may be inserted into and coupled to the groove 121d, 122d of the first conductor portion 121a, 122a.

In this way, the coupling protrusion 121e, 122e of the second conductor portion 121b, 122b is coupled to the groove 121d, 122d of the first conductor portion 121a, 122a at the joining surface 121c, 122c of the first conductor portion 121a, 122a and the second conductor portion 121b, 122b, thereby improving the joining strength of the first conductor portion 121a, 122a and the second conductor portion 121b, 122b.

The second conductor portion 121b, 122b may be exposed to the outside of the cell case 130, and at least a portion of the second conductor portion 121b, 122b may be exposed to the outside of the cell case 130. The portion of the second conductor portion 121b, 122b exposed to the outside of the cell case 130 may be connected to the busbars 310 and 320. As described above, the electrode leads 121 and 122 of the battery cell 110 may be connected to the busbars 310 and 320 arranged on the busbar frames 300, and the second conductor portions 121b and 122b of the electrode leads 121 and 122 exposed from the cell case 130 may be connected to the busbars 310 and 320.

The lead film 113 may be arranged on the electrode lead 121, 122, and as shown in FIG. 8, the lead film 113 may cover the joining boundary (joining surface 121c, 122c) of the first conductor portion 121a, 122a and the second conductor portion 121b, 122b. That is, the upper portion of the joining surface 121c, 122c may be covered by the lead film 113.

In this way, in the present exemplary embodiment, an electrode lead formed by joining materials having high thermal conductivity is applied, which improves heat dissipation characteristics, thereby mitigating temperature increase in the cell and the electrode lead caused by current applied to the battery cell and current generated from the battery cell.

This improves the output, rapid charging and safety of the battery cell.

Note that FIG. 10 shows an electrode lead 121, 122 according to a second exemplary embodiment of the present disclosure, showing an example in which the first conductor portion 121a, 122a has a coupling protrusion 121g, 122g and the second conductor portion 121b, 122b has a groove 121f, 122f, unlike the previous exemplary embodiment.

That is, in FIG. 10, a groove 121f, 122f may be formed in the joining surface 121c, 122c of the second conductor portion 121b, 122b, to which the first conductor portion 121a, 122a is joined. The groove 121f, 122f may extend along the width direction of the second conductor portion 121b, 122b, and may be formed over the entire width of the second conductor portion 121b, 122b.

The groove 121f, 122f may have a predetermined depth in the inner direction of the second conductor portion 121b, 122b from the joining surface 121c, 122c, and a coupling protrusion 121g, 122g of the first conductor portion 121a, 122a may be inserted into and coupled to the groove 121f, 122f.

The first conductor portion 121a, 122a may include a coupling protrusion 121g, 122g on the joining surface 121c, 122c that is joined to the second conductor portion 121b, 122b.

The coupling protrusion 121g, 122g may extend along the width direction of the first conductor portion 121a, 122a, and may be formed over the entire width of the first conductor portion 121a, 122a.

The coupling protrusion 121g, 122g may protrude from the joining surface 121c, 122c by a predetermined length in the direction of the second conductor portion 121b, 122b, and the coupling protrusion 121g, 122g may be inserted into and coupled to the groove 121f, 122f of the second conductor portion 121b, 122b.

In this way, the coupling protrusion 121g, 122g of the first conductor portion 121a, 122a is coupled to the groove 121f, 122f of the second conductor portion 121b, 122b at the joining surfaces 121c and 122c of the first conductor portion 121a, 122a and the second conductor portion 121b, 122b, thereby improving the joining strength of the first conductor portion 121a, 122a and the second conductor portion 121b, 122b.

Note that FIG. 11 shows an electrode lead 121, 122 according to a third exemplary embodiment of the present disclosure, showing an example in which the first conductor portion 121a, 122a has a wave-shaped joining surface 121c and the second conductor portion 121b, 122b has a wave-shaped joining surface 122c, unlike the previous exemplary embodiments.

That is, in FIG. 11, the joining surface 121c of the first conductor portion 121a, 122a, to which the second conductor portion 121b, 122b is joined, may be formed to have a wave shape. The wave shape may extend along the width direction of the first conductor portion 121a, 122a, and may be formed over the entire width of the first conductor portion 121a, 122a.

The joining surface 122c of the second conductor portion 121b, 122b may be formed to correspond to the joining surface 121c of the first conductor portion 121a, 122a. That is, the joining surface 122c of the second conductor portion 121b, 122b, to which the first conductor portion 121a, 122a is joined, may be formed to have a wave shape. The wave shape may extend along the width direction of the second conductor portion 121b, 122b, and may be formed over the entire width of the second conductor portion 121b, 122b.

In this way, since the joining surfaces 121c and 122c of the first conductor portion 121a, 122a and the second conductor portion 121b, 122b are each formed to have a wave shape, the areas of the joining surface 121c and 122c can be increased and the joining strength can be increased. In addition, the joining surface 122c of the second conductor portion 121b, 122b having high thermal conductivity is increased, thereby further improving the heat dissipation performance. In addition, the stress due to external force is distributed at the wave-shaped joining surface, so that the joining strength can be further improved.

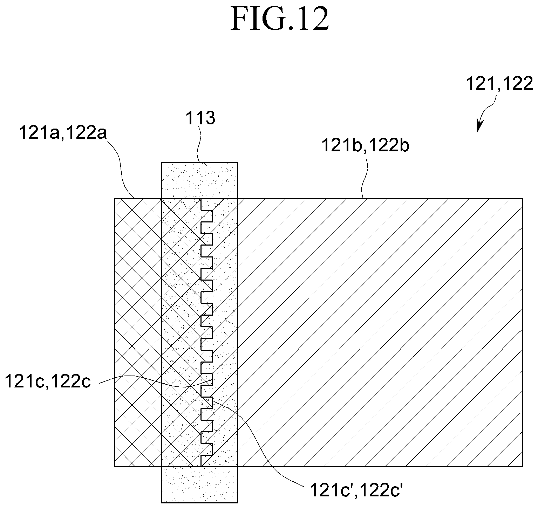

Note that FIG. 12 shows an electrode lead 121, 122 according to a fourth exemplary embodiment of the present disclosure, showing an example in which the first conductor portion 121a, 122a has a serrated joining surface 121c and the second conductor portion 121b, 122b has a serrated joining surface 122c.

That is, in FIG. 12, the joining surface 121c of the first conductor portion 121a, 122a, to which the second conductor portion 121b, 122b is joined, may be formed to have a serrated shape. The serrated shape may extend along the width direction of the first conductor portion 121a, 122a, and may be formed over the entire width of the first conductor portion 121a, 122a.

The joining surface 122c of the second conductor portion 121b, 122b may be formed to correspond to the joining surface 121c of the first conductor portion 121a, 122a. That is, the joining surface 122c of the second conductor portion 121b, 122b, to which the first conductor portion 121a, 122a is joined, may be formed to have a serrated shape. The serrated shape may extend along the width direction of the second conductor portion 121b, 122b, and may be formed over the entire width of the second conductor portion 121b, 122b.

In this way, since the joining surfaces 121c and 122c of the first conductor portion 121a, 122a and the second conductor portion 121b, 122b are each formed to have a serrated shape to engage with each other, the areas of the joining surfaces 121c and 122c can be increased and the joining strength can be increased. In addition, the joining surface 122c of the second conductor portion 121b, 122b having high thermal conductivity is increased, thereby further improving the heat dissipation performance.

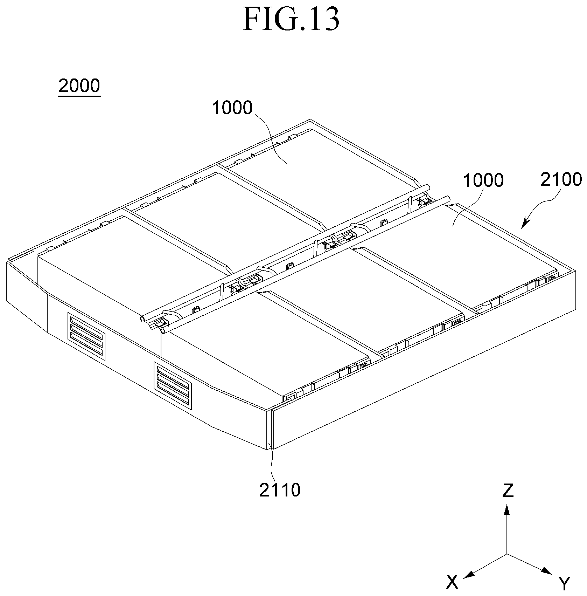

One or more battery modules 1000 according to the present disclosure as described above may form a battery pack 2000. As shown in FIG. 13, a battery pack 2000 according to an exemplary embodiment of the present disclosure may accommodate one or more battery modules 1000 inside a pack case 2100, and may include various control and protection systems, such as a battery management system (BMS) and a cooling system.

The pack case 2100 may include a lower housing 2110 and an upper housing (not shown) coupled to an upper side of the lower housing 2110, and a plurality of battery modules 1000 may be stored in an internal space of the lower housing 2110 and the upper housing.

Note that, in the exemplary embodiment of the present disclosure, an example in which the plurality of battery modules 1000 are accommodated inside the battery pack 2000 is shown; however, the plurality of battery cells 110 may be directly arranged inside the battery pack 2000.

The battery module 1000 and the battery pack 2000 according to the present disclosure configured in this manner may be applied to various devices. Specifically, they may be applied to transportation means such as electric bicycles, electric vehicles, and hybrid vehicles, or energy storage systems (ESS), but are not limited thereto and may be applied to various other devices that use secondary batteries.

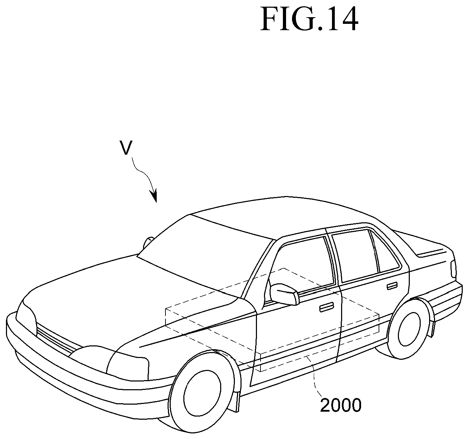

FIG. 14 shows an electric vehicle V equipped with the battery pack 2000. In the electric vehicle V, the wheels are driven by a motor that receives power from the battery pack 2000, thereby enabling the electric vehicle to travel.

Although the present disclosure has been described with reference to preferred exemplary embodiments as described above, it is not limited to the above-described exemplary embodiments, and various changes and modifications can be made by one skilled in the art to which the present disclosure belongs without departing from the spirit of the present disclosure.

### [Industrial Applicability]

The present disclosure can provide an electrode lead, an electrode assembly, a battery cell including the same, and a battery module including the electrode assembly capable of improving heat dissipation characteristics.

## Claims

1. An electrode assembly comprising:
a positive electrode;
a negative electrode;
a separator arranged between the positive electrode and the negative electrode; and
an electrode lead connected to the positive electrode or the negative electrode, wherein
the electrode lead comprises
a first conductor portion, and
a second conductor portion joined to the first conductor portion in a longitudinal direction.

2. The electrode assembly of claim 1, wherein
the first conductor portion is made of a first metal, and
the second conductor portion is made of a second metal different from the first metal.

3. The electrode assembly of claim 2, wherein the electrode lead is connected to the positive electrode.

4. The electrode assembly of claim 3, wherein the first metal is aluminum.

5. The electrode assembly of claim 3, wherein the first conductor portion of the electrode lead is connected to a positive electrode tab of the positive electrode.

6. The electrode assembly of claim 4, wherein the second metal is copper or nickel-plated copper.

7. The electrode assembly of claim 2, wherein
the first conductor portion comprises a groove in a joining surface to which the second conductor portion is joined, and
the second conductor portion comprises a coupling protrusion on a joining surface to which the first conductor portion is joined, the coupling protrusion being coupled to the groove.

8. The electrode assembly of claim 2, wherein
the first conductor portion comprises a coupling protrusion on a joining surface to which the second conductor portion is joined, and
the second conductor portion comprises a groove in a joining surface to which the first conductor portion is joined, the coupling protrusion being coupled to the groove.

9. The electrode assembly of claim 1, wherein the first conductor portion and the second conductor portion each have a wave-shaped joining surface extending in a width direction.

10. The electrode assembly of claim 1, wherein the first conductor portion and the second conductor portion each have a serrated joining surface extending in a width direction.

11. A battery cell comprising:
an electrode assembly; and
a cell case configured to accommodate the electrode assembly, wherein
the electrode assembly comprises
a positive electrode;
a negative electrode;
a separator arranged between the positive electrode and the negative electrode; and
an electrode lead connected to the positive electrode or the negative electrode, and
the electrode lead comprises a first conductor portion; and a second conductor portion joined to the first conductor portion in a longitudinal direction.

12. The battery cell of claim 11, wherein the first conductor portion is made of a first metal, and the second conductor portion is made of a second metal different from the first metal.

13. The battery cell of claim 12, wherein the first conductor portion of the electrode lead is connected to a positive electrode tab of the positive electrode.

14. The battery cell of claim 13, wherein the first conductor portion of the electrode lead is arranged inside the cell case.

15. The battery cell of claim 13, wherein the first metal is aluminum.

16. The battery cell of claim 15, wherein the second metal is copper or nickel-plated copper.

17. The battery cell of claim 12, wherein
the first conductor portion comprises a groove in a joining surface to which the second conductor portion is joined, and
the second conductor portion comprises a coupling protrusion on a joining surface to which the first conductor portion is joined, the coupling protrusion being coupled to the groove.

18. The battery cell of claim 12, wherein
the first conductor portion comprises a coupling protrusion on a joining surface to which the second conductor portion is joined, and
the second conductor portion comprises a groove in a joining surface to which the first conductor portion is joined, the coupling protrusion being coupled to the groove.

19. A battery module comprising a plurality of battery cells of claim 11.
